Europäisches Patentamt

European Patent Office

Office européen des brevets

(11) Veröffentlichungsnummer: **0 488 125 A2**

# EUROPÄISCHE PATENTANMELDUNG

(21) Anmeldenummer: **91120082.2**

(22) Anmeldetag: **25.11.91**

(51) Int. Cl.5: **G06F 3/14**, G09G 1/16

(30) Priorität: **29.11.90 DE 4038118**

(43) Veröffentlichungstag der Anmeldung:
**03.06.92 Patentblatt 92/23**

(84) Benannte Vertragsstaaten:
**DE FR GB IT**

(71) Anmelder: **ESG Elektronik-System-Gesellschaft mbH**
**Vogelweideplatz 9**
**W-8000 München 80(DE)**

(72) Erfinder: **Beckmann, Heinrich, Dr.**
**Ammerstrasse 1**
**W-8000 München 71(DE)**
Erfinder: **Jöckel, Günther, Dipl.-Ing.**
**Am Ameisenberg 2c**
**W-8904 Friedberg(DE)**

(74) Vertreter: **Prechtel, Jörg, Dipl.-Phys. Dr. et al**
**Patentanwälte H. Weickmann, Dr. K. Fincke**
**F.A. Weickmann, B. Huber Dr. H. Liska, Dr. J.**
**Prechtel Kopernikusstrasse 9 Postfach 86 08 20**
**W-8000 München 86(DE)**

(54) **Multifunktionales Sichtanzeigegerät.**

(57) Es wird ein multifunktionales Sichtanzeigegerät vorgeschlagen mit einem Gehäuse, einem Bildschirm, wenigstens einer Signal-Schnittstelle für von jeweils einer Signalquelle abgegebene Signale, wenigstens einem Bildgenerator zur Umwandlung der von der wenigstens einen Signal-Schnittstelle stammenden Signale in am Bildschirm anzeigbare Bilder und einer Bildschirm-Schnittstelle zur Ansteuerung des Bildschirms entsprechend den von dem wenigstens einen Bildgenerator erzeugten Bildern, wobei wenigstens ein Bildpunktspeicher zur Zwischenspeicherung und Überlagerung der von den Bildgeneratoren erzeugten Bilder bis zu deren Darstellung am Bildschirm vorgesehen ist, wenigstens zwei Signal-Schnittstellen vorgesehen sind, jeder Signal-Schnittstelle wenigstens ein Bildgenerator zugeordnet ist und eine Ablaufsteuerungs-Einrichtung vorgesehen ist zur Koordinierung des Zusammenwirkens der Signal-Schnittstellen, der Bildgeneratoren, des wenigstens einen Bildpunktspeichers und der Bildschirm-Schnittstelle.

Fig.1

EP 0 488 125 A2

Die Erfindung betrifft ein multifunktionales Sichtanzeigegerät, umfassend

- ein Gehäuse,
- einen Bildschirm,
- wenigstens eine Signal-Schnittstelle für von jeweils einer Signalquelle abgegebene Signale,
- wenigstens einen Bildgenerator zur Umwandlung der von der wenigstens einen Signal-Schnittstelle stammenden Signale in am Bildschirm anzeigbare Bilder, und
- eine Bildschirm-Schnittstelle zur Ansteuerung des Bildschirms entsprechend den von dem wenigstens einen Bildgenerator erzeugten Bildern.

Eine weit verbreitete Art von Sichtanzeigegeräten sind die Displays von Personal Computern (PC). Die am Bildschirm das Displays anzuzeigenden Bilder werden der Signal-Schnittstelle des Displays aus dem Hauptspeicher des Personal Computers in digitaler Form zugeführt. Ein der Signal-Schnittstelle nachgeschalteter Bildgenerator wandelt die digitalen Eingangssignale, bspw. der PC-Norm entsprechende RGB-Signale (RGB - Rot Grün Blau), um und übergibt die erzeugten Bilddaten an eine Bildschirm-Schnittstelle zur Anzeige am Bildschirm des Displays.

Mit den bekannten Sichtanzeigegeräten ist es nicht möglich, Graphik-Daten und Text-Daten unabhängig voneinander gleichzeitig am Bildschirm darzustellen. Soll dennoch eine mit Text überlagerte Graphik angezeigt werden, so muß dieser Text zunächst im Arbeitsspeicher des Personal Computers in die Graphik eingearbeitet werden. Erst dann werden die entsprechend veränderten Graphik-Daten der Signal-Schnittstelle des Sichtanzeigegeräts übergeben.

Weiter ist es bei den bekannten Sichtanzeigegeräten nicht möglich, von entfernten Signalquellen in serieller Form übertragene Daten direkt am Bildschirm anzuzeigen, da die übertragenen Daten stets zunächst in den Arbeitsspeicher des Personal Computers eingelesen werden müssen. Damit mit der Übertragung der seriellen Daten begonnen werden kann, hat der Personal Computer der entfernten Signalquelle Empfangsbereitschaft anzuzeigen. Hierzu muß die Arbeit am Personal Computer unterbrochen werden. Während der Übertragung können an dem Personal Computer keine anderen Arbeiten durchgeführt werden. Eine solche Arbeitsunterbrechung wird insbesondere dann als unangenehm empfunden, wenn es sich bei den empfangenen Daten um reine "Anzeigedaten" handelt, d.h. Daten, die nicht gespeichert, sondern lediglich am Display zur Anzeige gebracht werden sollen.

Die Reihe der Beispiele von Signalquellen, für welche die gleichzeitige Anzeige von Daten auf einem Sichtanzeigegerät als wünschenswert erscheint, kann beliebig fortgesetzt werden. Die Art und die Anzahl der benötigten Signalquellen hängt hierbei von der jeweiligen Anwendung ab.

Es ist daher Aufgabe der Erfindung, ein Sichtanzeigegerät bereitzustellen, bei welchem von einer Vielzahl von Signalquellen Signale empfangen werden können und die wenigstens zwei der den Signalen entsprechenden Bilder gleichzeitig am Bildschirm des Sichtanzeigegeräts dargestellt werden können.

Zur Lösung dieser Aufgabe wird vorgeschlagen, daß wenigstens ein Bildpunktspeicher zur Zwischenspeicherung und Überlagerung der von den Bildgeneratoren erzeugten Bilder bis zu deren Darstellung am Bildschirm vorgesehen ist, daß wenigstens zwei Signal-Schnittstellen vorgesehen sind, daß jeder Signal-Schnittstelle wenigstens ein Bildgenerator zugeordnet ist und daß eine Ablaufsteuerungs-Einrichtung vorgesehen ist zur Koordinierung des Zusammenwirkens der Signal-Schnittstellen, der Bildgeneratoren, des wenigstens einen Bildpunktspeichers und der Bildschirm-Schnittstelle.

Das erfindungsgemäße Sichtanzeigegerät weist wenigstens zwei Signal-Schnittstellen auf, deren Anzahl und Zusammenstellung den jeweiligen Anwendungserfordernissen in einfacher Weise angepaßt werden können. Zur Umwandlung der von den Signal-Schnittstellen empfangenen Signale in am Bildschirm darstellbare Bilder und Bereitstellung der Bilder zur Darstellung am Bildschirm, ist jeder Signal-Schnittstelle wenigstens ein Bildgenerator zugeordnet. Hierdurch ist eine verzögerungsfreie Darstellung der Bilder am Bildschirm gewährleistet. Eine Ablaufsteuerungs-Einrichtung koordiniert die ordnungsgemäße Zusammenarbeit der Signal-Schnittstellen, Bildgeneratoren, des Bildpunktspeichers und der Bildschirmschnittstelle. Insbesondere steuert die Ablaufsteuerungs-Einrichtung das wechselweise Einlesen und somit die Überlagerung der von den Bildgeneratoren bereitgestellten Bilder in den wenigstens einen Bildpunktspeicher. In dem aus dem Bildpunktspeicher abgerufenen und auf dem Bildschirm dargestellten Bild kann somit die von den Signal-Schnittstellen stammende Information gleichzeitig dargestellt werden.

Für weitaus die meisten Anwendungen des Sichtanzeigegeräts ist es ausreichend, daß wenigstens drei Signal-Schnittstellen vorgesehen sind, wobei die wenigstens drei Signal-Schnittstellen

- eine Signal-Schnittstelle für Fernsehsignale, insbesondere der CCIR-Norm entsprechende Signale (CCIR - Comité Consultativ International des Radiocommunications),
- eine Signal-Schnittstelle für Signale von Monitor-Ausgängen von Rechnern, insbesondere RGB-Signale von Personal Computern, und

- eine Signal-Schnittstelle für Signale von seriellen Datenverbindungen, insbesondere von RS 485-, RS 422- und RS 232 C-Datenverbindungen,

umfassen.

Alternativ ist es jedoch auch möglich, daß wenigstens zwei Signal-Schnittstellen vorgesehen sind, wobei die wenigstens zwei Signal-Schnittstellen umfassen:

- eine Multisync-Signal-Schnittstelle für RGB-Signale, insbesondere der CCIR-Norm und dem Standard von Personal Computern entsprechende RGB-Signale und
- eine Signal-Schnittstelle für Signale von seriellen Datenverbindungen, insbesondee von RS485-, RS422- und RS 232C-Datenverbindungen.

An Messe- und Informationsständen läßt sich ein solches multifunktionales Sichtanzeigegerät in hervorragender Weise einsetzen. So brauchen Werbefilme über ein Produkt nicht mehr in aufwendiger Tricktechnik mit Informationstexten und Graphiken unterlegt werden, sondern es ist möglich, das beispielsweise von einem Video-Recorder stammende Fersehbild auf dem Bildschirm darzustellen und gleichzeitig mit von einem Personal Computer abgerufenen Informationstexten und Graphiken zu unterlegen. Darüberhinaus ist es beispielsweise möglich, über die serielle Daten-Schnittstelle eingespeiste, aktuelle Ergebnisse eines Versuchs am Bildschirm darzustellen, welcher vor den Augen der Besucher des Stands abläuft.

Soll entweder ein Werbefilm von einem Video-Recorder oder eine Werbegraphik von einem Personal Computer am Sichtanzeigegerät angezeigt werden, so können die beiden RGB-Schnittstellen auch in einer Multisync-Schnittstelle zusammengefaßt sein.

Der Bildschirm des Sichtanzeigegeräts kann in einfacher Weise dadurch ausgewechselt werden, daß der Bildschirm an einem mit dem Gehäuse verbindbaren Trägerrahmen befestigt ist. Hierbei ist es besonders bevorzugt, daß auch die Bildgeneratoren, der wenigstens eine Bildpunktspeicher, die Bildschirm-Schnittstelle und die Ablaufsteuerungs-Einrichtung am Trägerrahmen angeordnet sind. Trotz eines ggf. sehr kompakten Aufbaus des gesamten Sichtanzeigegeräts können somit mit dem Trägerrahmen alle wesentlichen Funktionsteile des Sichtanzeigegeräts in einfacher Weise ausgebaut werden, wodurch ein ungehinderter Zugriff auf diese Teile gewährleistet ist.

Ein sofortiger Einsatz des erfindungsgemäßen Sichtanzeigegeräts ohne Umbau- oder Anpaßmaßnahmen ist dadurch sichergestellt, daß die Signal-Schnittstellen über Steckverbindungen, vorzugsweise Kabelsteckverbindungen oder Rack-und-Panel-Steckverbindungen, mit zur jeweiligen Signalquelle führenden Signalleitungen verbindbar sind.

Damit das erfindungsgemäße Sichtanzeigegerät auch in Anwendungsbereichen mit extremen äußeren Bedingungen, beispielsweise in wissenschaftlichen oder militärischen Anwendungsbereichen, eingesetzt werden kann, wird vorgeschlagen, daß das Gehäuse wasserdicht und/oder EMV-dicht ausgebildet ist (EMV - Elektro-Magnetische Verträglichkeit).

Durch die Ausbildung des Bildschirms als Flüssigkristall-Anzeige mit aktiver Halbleiter-Ansteuerung kann der Raumbedarf, insbesondere die Einbautiefe, reduziert werden. Steht genügend Einbauraum zur Verfügung, so kann auch vorgesehen sein, daß der Bildschirm als CRT-Bildschirm ausgebildet ist (CRT - Cathode Ray Tubes - Braun'sche Röhre).

Die Arbeit an dem Sichtanzeigegerät kann durch die Ausbildung des Bildschirm als Farbbildschirm angenehmer gemacht werden.

Um die Anzeigefrequenz der Bilder am Bildschirm erhöhen zu können wird vorgeschlagen, daß wenigstens zwei Bildpunktspeicher vorgesehen sind zur wechselweisen Speicherung der von den Bildgeneratoren erzeugten Bilder und Darstellung der Bilder am Bildschirm. Die vielseitige Verwendbarkeit des Sichtanzeigegeräts kann dadurch weiter erhöht werden, daß in dem Gehäuse eine Mutterplatine vorgesehen ist mit Möglichkeit eines Anschlusses von Steckkarten.

Eine Systemerweiterung ohne Kompatibilitätsprobleme kann dadurch gewährleistet werden, daß an die Mutterplatine wenigstens eine der folgenden Steckkarten anschließbar ist,

- eine Datenübertragungs-Schnittstellenkarte zur Verbindung mit Datenkommunikationsgeräten, insbesondere Datenfunk,
- eine Massendaten-Schnittstellenkarte zum schnellen Laden von Daten von Massenspeichern,
- eine Datenbus-Schnittstellenkarte zum Anschluß an Datennetze,
- eine Analog-Schnittstellenkarte zur Anpassung an externe Geräte mit analoger Signalstruktur,
- eine Bildverarbeitungs-Steckkarte zur Bearbeitung der Bilder vor der Anzeige auf dem Bildschirm,
- eine Mikroprozessor-Steckkarte zur Ausführung von Datenverarbeitungsfunktionen,
- eine Massenspeicher-Steckkarte zur Bereitstellung hoher Speicherkapazität.

Eine weitere Raumeinsparung kann dadurch erreicht werden, daß das Sichtanzeigegerät durch Anschluß einer Mikroprozessor-Steckkarte an die Mutterplatine als aktives Sichtanzeigegerät ausgebildet ist. Zur Verwendung des aktiven Sichtanzeigegeräts als Mikro-Computer ist lediglich noch der Anschluß einer Computer-Tastatur erforderlich.

Um die von den einzelnen Signal-Schnittstellen stammenden und am Bildschirm angezeigten Bilder unabhängig voneinander beeinflussen zu können, wird vorgeschlagen, daß, für jede Signal-Schnittstelle getrennt, Bedienungselemente, vorzugsweise Tastenfelder, vorgesehen sind, insbesondere zur Helligkeitseinstellung, Kontrasteinstellung und Einstellung der Position und Größe des Bildes am Bildschirm. Die Erfindung wird im folgenden an Ausführungsbeispielen an Hand der Zeichnung näher erläutert. Es zeigen:

Fig. 1     eine Draufsicht einer zum Einbau in ein Rack ausgebildeten ersten Ausführungsform des Sichtanzeigegeräts bei abgenommenem Deckel;

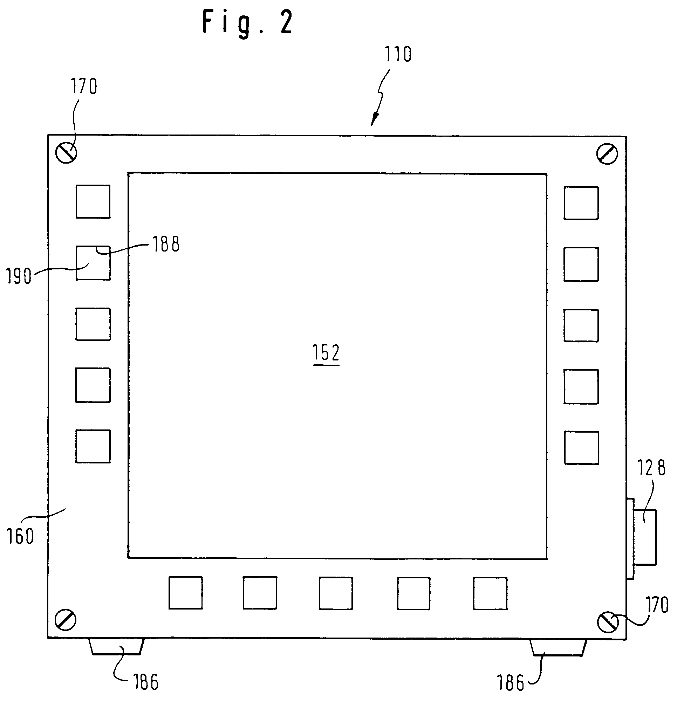

Fig. 2     eine Frontansicht einer zweiten Ausführungsform eines Sichtanzeigegeräts;

Fig. 3     eine Ansicht analog Fig. 1 einer dritten Ausführungsform eines Sichtanzeigegeräts;

Fig. 4     eine Ansicht analog Fig. 1 einer vierten Ausführungsform eines Sichtanzeigegeräts; und

Fig. 5     ein das Zusammenwirken der einzelnen Funktionselemente des Sichtanzeigegeräts erläuterndes Blockdiagramm.

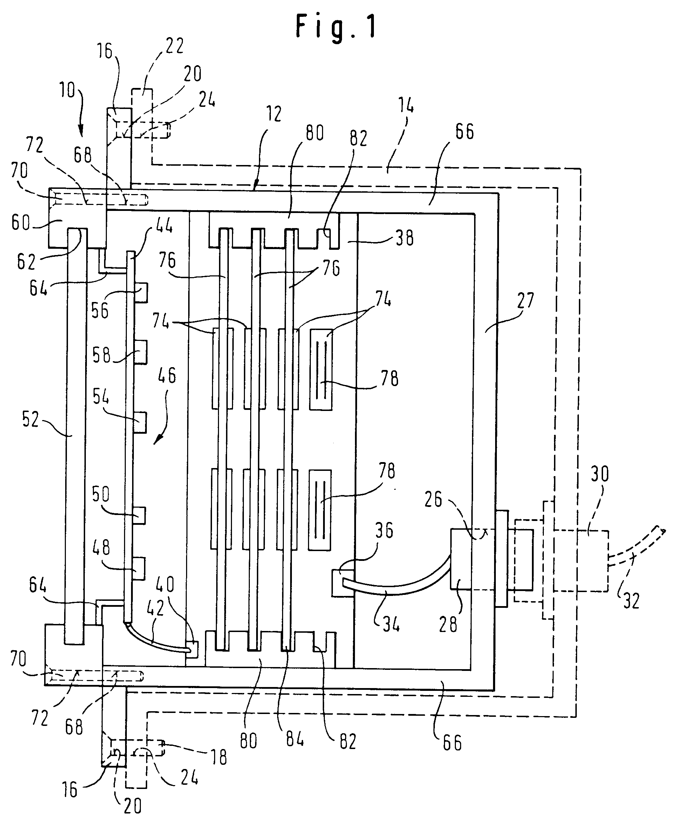

Mit Bezug auf Fig. 1 umfaßt das im folgenden mit 10 bezeichnete Sichtanzeigegerät ein Gehäuse 12, an bzw. in welchem sämtliche Funktionselemente des Sichtanzeigegeräts 10 angeordnet sind. Das Gehäuse 12 ist in der in Fig. 1 dargestellten Ausführungsform in ein gestrichelt dargestelltes Rack 14 eingebaut. Hierzu sind am Gehäuse 12 seitliche Vorsprünge 16 vorgesehen. Die Befestigung des Gehäuses 12 am Rack 14 erfolgt beispielsweise mittels in Fig. 1 ebenfalls gestrichelt dargestellten Schraubbolzen 18, welche jeweils eine in dem jeweiligen seitlichen Vorsprung 16 vorgesehene Bohrung 20 und eine in einem Frontteil 22 des Racks 14 vorgesehene Gewindebohrung 24 durchsetzen. Sämtliche zum elektrischen Anschluß und zur Signalübertragung notwendigen Verbindungen zum Sichtanzeigegerät 10 sind in dem in Fig. 1 dargestellten Ausführungsbeispiel in Form von Rack-und-Panel-Steckverbindungen ausgebildet, von denen in Fig. 1 der Übersichtlichkeit halber lediglich eine mit einer Anschlußbuchse 28 und einem Anschlußstecker 30 dargestellt ist. Die Anschlußbuchse 28 ist in einer Ausnehmung 26, welche in einer Rückwand 27 des Gehäuses 12 vorgesehen ist, angeordnet. Der Anschlußstecker 30 ist im Rack 14 angeordnet. Die Rack- und Panel-Steckverbindung werden beim Einsetzen des Sichtanzeigegeräts in das Rack mit anschließendem Verschrauben des Sichtanzeigegeräts mit dem Rack geschlossen.

Der Anschlußstecker 30 ist beispielsweise mit einer zu einer nicht dargestellten Signalquelle führenden Signalleitung 32 verbunden. Von der Anschlußbuchse 28 führt ein Kabel 34 zu einem ersten Anschluß 36 auf einer im Gehäuse 12 angeordneten Mutterplatine 38 (Motherboard). Von einem zweiten Anschluß 40 führt ein zweites Kabel 42 zu einer Platine 44, auf welcher sämtliche zum Betrieb des Sichtanzeigegeräts 10 benötigten Elektronik-Baugruppen 46 angeordnet sind.

Im einzelnen umfassen die Elektronik-Baugruppen 46 Signal-Schnittstellen 48, diesen Signal-Schnittstellen zugeordnete Bildgeneratoren 50 und Bildpunktspeicher 54. Von diesen Bauelementen sind in Fig. 1 der Übersichtlichkeit halber jeweils nur eines dargestellt. Die Bildgeneratoren 50 wandeln die den Signal-Schnittstellen 48 zugeleiteten Signale in an einem Bildschirm 52 darstellbare Bilder um. In den Bildpunktspeichern 54 werden die von Bildgeneratoren 50 erzeugten Bilder zur Darstellung auf dem Bildschirm 52 zwischengespeichert. Weiter umfassen die Elektronik-Baugruppen 46 eine Ablaufsteuerungs-Einrichtung 56 zur Koordinierung des Zusammenwirkens der einzelnen Bauelemente sowie eine Bildschirm-Schnittstelle 58.

Die Spannungsversorgung des Sichtanzeigegeräts 10 erfolgt über eine nicht dargestellte Rack-und-Panel-Steckverbindung. Sämtliche zum Betrieb des Bildschirms 52 und der Elektronik-Baugruppen 46 benötigten Spezialspannungen werden von nicht dargestellten, im Sichtanzeigegerät 10 angeordneten Transformatoren erzeugt.

Der Bildschirm 52 ist in einer in einem Trägerrahmen 60 vorgesehenen Halterungsnut 62 gehaltert. Weiter ist an dem Trägerrahmen 60 über L-förmig ausgebildete Stützelemente 64 auch die Platine 44 befestigt. Zur Befestigung des Trägerrahmens 60 am Gehäuse 12 durchsetzen Schraubbolzen 70 im Trägerrahmen 60 vorgesehene Bohrungen 72 und greifen in Gewindebohrungen 68 ein, welche in Seitenwänden 66 des Gehäuses 12 vorgesehen sind.

Zur Erhöhung der Leistungsfähigkeit und der Multifunktionalität des Sichtanzeigegeräts 10 sind neben den auf der Platine 44 vorgesehenen Signal-Schnittstellen 48 auf der Mutterplatine 38 Steckplätze 74 für Erweiterungs-Steckkarten 76 vorgesehen. Der elektrische Anschluß der Erweiterungs-Steckkarten 76 erfolgt über Steckersockel 78. Zur stabilen Halterung der Erweiterungs-Steckkarten 76 im Gehäuse 12 sind Führungsschienen 80 mit Führungsausnehmungen 82 vorgesehen. Die Erweiterungs-Steckkarten 76 greifen mit ihren seitlichen Rändern 84 in die Führungsausnehmungen 82 ein.

Als Bildschirm kann beispielsweise eine Flüssigkristall-Anzeige (LCD-Display; LCD - Liquid Crystal Display) mit TFT-Matrixansteuerung (TFT - Thin Film Transistor) verwendet werden. Ein solches LCD-Display hat den Vorteil äußerst geringer Einbautiefe. Die Bildschirm-Diagonale ist auf keinen bestimmten Wert festgelegt. Übliche Bildschirme weisen Diagonalen von etwa 10 cm (4 Zoll) bis etwa 48 cm (19 Zoll) Länge auf. Für die meisten Anwendungsbereiche wird ein Bildschirm mit einer Diagonale von etwa 25 cm (10 Zoll) Länge als guter Kompromiß zwischen nutzbarer Bildschirm-Fläche und den Kosten für den Bildschirm angesehen.

Bei Verwendung eines "10 Zoll"-Bildschirms könnten die Erweiterungs-Steckkarten 76 beispielsweise im Doppel-Europakartenformat und die Mutterplatine 38 gemäß dem VME-Standard ausgebildet sein (VME - Versa Module Europe).

Auf der Platine 44 sind standardmäßig eine Signal-Schnittstelle für Fernsehsignale, eine Signal-Schnittstelle für Computer-Display-Ausgänge sowie eine Signal-Schnittstelle für eine serielle Datenübertragung vorgesehen. Die Fernsehsignal-Schnittstelle ist insbesondere für der CCIR-Norm entsprechende RGB-Signale ausgelegt. Die Computer-Display-Schnittstelle ist insbesondere zur Verarbeitung von dem IBM-PC-Standard entsprechenden RGB-Signalen ausgebildet. Die Serielle Daten-Schnittstelle entspricht insbesondere der EIA-Norm (EIA - Electronic Industries Association) und ist von einer RS 485-, einer RS 422- oder einer RS 232 C-Schnittstelle gebildet . Falls jeweils nur eines der RGB-Signale, d.h. entweder das Fernsehsignal oder das Computer-Display-Signal, am Bildschirm angezeigt werden sollen, können die Fernsehsignal-Schnittstelle und die Computer-Display-Schnittstelle in einer Multisync-Schnittstelle zusammengefaßt werden. Diese Kombinationen von Signal-Schnittstellen sind für die Verwendung des Sichtanzeigegeräts, z.B. an Messeständen, von großem Nutzen, da auf einem Sichtanzeigegerät bspw. ein Werbefilm und gleichzeitig Zusatzinformationen über ein ausgestelltes Produkt gezeigt werden können. Aber auch in Verkehrsleitsystemen, bspw. einem Flugleitsystem, kann diese Schnittstellen-Kombination eingesetzt werden. Über eine Kontrollkamera kann beispielsweise ein Fernsehbild der Start- und Landebahn eines Flughafens am Sichtanzeigegerät dargestellt werden. Über die PC-Schnittstelle kann eine Computergraphik des aktuellen Radarbilds und über die serielle Schnittstelle der aktuelle Flugplan dem Fernsehbild überlagert werden.

Das erfindungsgemäße Sichtanzeigegerät kann auch als Fernsehgerät eingesetzt werden, indem man als Empfangsteil das Empfangsteil eines dem Sichtanzeigegerät vorgeschalteten Video-Recorders verwendet und den Ton bspw. über eine HiFi-Anlage wiedergibt. Hierbei wird das Antennen-Signal von einem HF-Demodulator (HF - Hoch-Frequenz) im Empfangsteil des Video-Recorders in ein Fernsehsignal umgewandelt. Zur Tonwidergabe kann ggf. zusätzlich eine Audio-Schnittstelle im Sichtanzeigegerät vorgesehen sein.

Die Zahl der möglichen Anwendungsgebiete kann durch Einsatz von Erweiterungs-Steckkarten beträchtlich erhöht werden. Insbesondere kann ein Sichtanzeigegerät durch Einsatz einer Mikroprozessor-Steckkarte (CPU-Steckkarte; CPU - Central Processing Unit) zu einem "aktiven" Sichtanzeigegerät aufgewertet werden und als solches als Arbeitsplatzrechner verwendet werden.

Werden neben einer Mikroprozessor-Steckkarte noch eine Massenspeicher-Steckkarte, eine für Datenfunk ausgelegte Datenübertragungs-Steckkarte sowie eine Bildverarbeitungs-Steckkarte in dem Sichtanzeigegerät eingesetzt, so ist dieses beispielsweise als Lagedarstellungsgerät, insbesondere für digitalisierte Landkarten oder dergleichen, verwendbar. Ein solches Lagedarstellungsgerät ist beispielsweise in Verkehrsleitsystemen einsetzbar. Jedoch ist auch ein Einsatz in militärischen Kampffahrzeugen denkbar.

Durch Einsatz einer Mikroprozessor-Steckkarte einer Massenspeicher-Steckkarte, einer Massendaten-Steckkarte und wenigstens einer Analog-Steckkarte kann das Sichtanzeigegerät in Wissenschaft und Forschung als Meßplatzrechner eingesetzt werden.

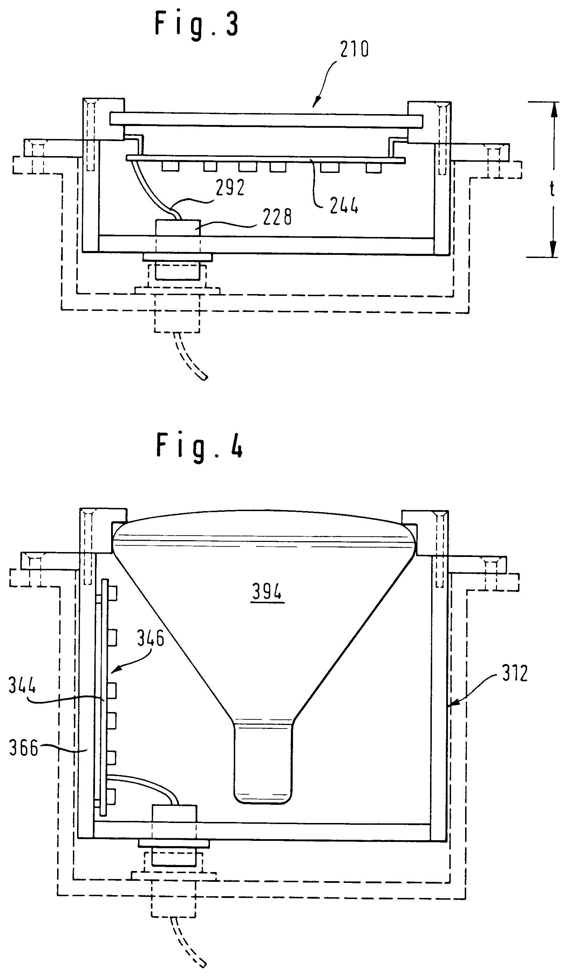

In Fig. 3 ist eine weitere Ausführungsform eines Sichtanzeigegeräts dargestellt. Im Vergleich zu Fig. 1 sind gleiche Teile mit gleichen Bezugszeichen versehen, jedoch vermehrt um die Zahl 200. Bei dem Sichtanzeigegerät 210 gemäß Fig. 3 wurde auf den Einsatz einer Mutterplatine verzichtet. Dementsprechend führt ein Verbindungskabel 292 direkt von der Anschlußbuchse 228 zur Platine 244. Dieses Ausführungsbeispiel zeichnet sich durch seine äußerst geringe Gerätetiefe t aus, deren Wert ohne weiteres lediglich 90 bis 100 mm betragen kann.

In Fig. 4 ist eine weitere Ausführungsform eines Sichtanzeigegeräts dargestellt. Im Vergleich zu Fig. 1 sind gleiche Teile mit gleichen Bezugszeichen versehen, jedoch vermehrt um die Zahl 300. Bei der Ausführungsform gemäß Fig. 4 wird anstelle eines Flüssigkristall-Bildschirms (LCD-Display) ein Röhrenbildschirm 394 (CRT-Display) zur Anzeige der Bilder eingesetzt. Voraussetzung hierfür ist selbstverständlich, daß die hierfür benötigte, größere Einbautiefe für das Sichtanzeigegerät 310 zur Verfügung steht. Die die Elektronik-Baugruppen 346 tragende Platine 344 ist in diesem Ausführungsbeispiel an einer der Seitenwände 366 des Gehäuses 312 befestigt.

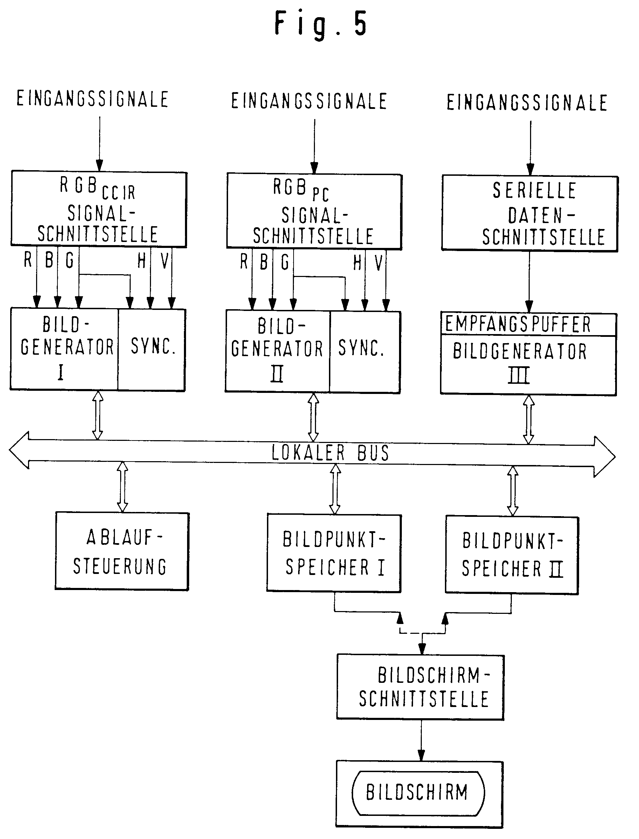

Im folgenden soll anhand von Fig. 5 das Zusammenwirken der Elektronik-Baugruppen 46, d.h. der Signal-Schnittstellen 48, der Bildgeneratoren 50, der Bildpunktspeicher 54, der Bildschirmschnittstelle 58 und der Ablaufsteuerung 56, näher erläutert werden. Die in Fig. 5 gezeigte Zusammenstellung der Elektronik-Baugruppen 46 entspricht der weiter oben beschriebenen Standard-Ausstattung des Sichtanzeigegeräts 10.

Ein der CCIR-Norm entsprechendes analoges Fernseh-Eingangssignal wird über die $RGB_{CCIR}$-Signal-Schnittstelle in das Sichtanzeigegerät eingegeben. Ein dieser $RGB_{CCIR}$-Signal-Schnittstelle zugeordneter Bildgenerator I wandelt die ihm zugeführten RGB-Signale unter Zuhilfenahme ebenfalls zugeführter Horizontal- und Vertikal-Sychronisationssignale in digitale Bilddaten um. Gegebenenfalls kann aus dem Grün-Signal ein zusätzliches Synchronisationssignal gewonnen werden.

Von Personal Computern stammende Eingangssignale werden in das Sichtanzeigegerät 10 über die $RGB_{PC}$-Signal-Schnittstelle eingegeben. Die Umwandlung der RGB-Signale in das zur Anzeige am Bildschirm erforderliche Datenformat, d.h. in digitale Bilddaten, erfolgt in einem Bildgenerator II. Auch dieser Bildgenerator II benötigt zur Umwandlung Horizontal- und Vertikal-Synchronisationssignale. Ein zusätzliches Synchronisationssignal kann auch hier aus dem Grün-Signal gewonnen werden.

Von entfernten Signalquellen übertragene, in serieller Form vorliegende Eingangssignale werden von der seriellen Daten-Schnittstelle an einen Empfangspuffer übergeben. Nachdem die zu einem Bild gehörenden seriellen Daten vollständig übertragen wurden, übergibt der Empfangspuffer die Daten an einen Bildgenerator III zur Erzeugung von zur Anzeige am Bildschirm geeigneten digitalen Bilddaten.

Die Ablaufsteuerung ruft die von den Bildgeneratoren I, II und III erzeugten Bilddaten ab und übermittelt sie über einen lokalen Daten-Bus zur Zwischenspeicherung an einen Bildpunktspeicher I. Je nach der vom Benutzer gewünschten Anzeige werden hierbei die Daten lediglich von einem Bildgenerator dem Bildpunktspeicher I übergeben oder aber die Bilddaten von mehreren Bildgeneratoren wechselweise dem Bildpunktspeicher I zugeführt. Im letzteren Fall werden die von den einzelnen Bildgeneratoren erzeugten Bilder gemäß den vom Benutzer gewünschten und beispielsweise über die Bedienungselemente 190 eingegebenen Bedingungen im Bildpunktspeicher I überlagert. Neben dem Bildpunktspeicher I ist in der in Fig. 5 dargestellten Zusammenstellung der Elektronik-Baugruppen 46 noch ein Bildpunktspeicher II vorgesehen. Die beiden Bildpunktspeicher I und II werden als Wechselpuffer verwendet, d.h. während in den Bildpunktspeicher I neue Bilddaten eingespeichert werden, werden die in den Bildpunktspeicher II bereits zuvor eingelesenen Bilddaten aus diesem wieder abgerufen und an eine Bildschirm-Schnittstelle zur Anzeige am Bildschirm übergeben. Dies kann zur Erhöhung der Anzeigefrequenz ggf. auch mehrfach geschehen. Sind sämtliche Bilddaten aus dem Bildpunktspeicher II ausgelesen, so wird die Bildschirm-Schnittstelle auf den Bildpunktspeicher I umgeschaltet. Nunmehr werden die Bilddaten aus dem Bildpunktspeicher I ausgelesen und neue Bildpunktdaten in den Bildpunktspeicher II eingelesen. Auch für die Synchronisation dieser Wechselschaltung und die Zeitablaufsteuerung des Ein-bzw. Auslesens der Daten in die Bildpunktspeicher bzw. aus den Bildpunktspeichern ist die Ablaufsteuerung verantwortlich.

**Patentansprüche**

1. Multifunktionales Sichtanzeigegerät, umfassend :
   - ein Gehäuse (12),
   - einen Bildschirm (52),
   - wenigstens eine Signal-Schnittstelle (48) für von jeweils einer Signalquelle abgegebene Signale,
   - wenigstens einen Bildgenerator (50) zur Umwandlung der von der wenigstens einen Signal-Schnittstelle stammenden Signale in am Bildschirm (52) anzeigbare Bilder, und
   - eine Bildschirm-Schnittstelle (58) zur Ansteuerung des Bildschirms (52) entsprechend den von dem wenigstens einen Bildgenerator (50) erzeugten Bildern, dadurch gekennzeichnet,

   daß wenigstens ein Bildpunktspeicher (54) zur Zwischenspeicherung und Überlagerung der von den Bildgeneratoren (50) erzeugten Bilder bis zu deren Darstellung am Bildschirm (52) vorgesehen ist,

   daß wenigstens zwei Signal-Schnittstellen (48) vorgesehen sind,

   daß jeder Signal-Schnittstelle (48) wenigstens ein Bildgenerator (50) zugeordnet ist, und

   daß eine Ablaufsteuerungs-Einrichtung (56) vorgesehen ist zur Koordinierung des Zusammenwirkens der Signal-Schnittstellen (48), der Bildgeneratoren (50), des wenigstens einen Bildpunktspeichers (54) und der Bildschirm-Schnittstelle (58).

2. Multifunktionales Sichtanzeigegerät nach Anspruch 1,
   dadurch gekennzeichnet,

daß wenigstens drei Signal-Schnittstellen (48) vorgesehen sind, wobei die wenigstens drei Signal-Schnittstellen (48) umfassen :
- eine Signal-Schnittstelle für Fernsehsignale, insbesondere der CCIR-Norm entsprechende RGB-Signale,
- eine Signal-Schnittstelle für Signale von Monitor-Ausgängen von Rechnern, insbesondere RGB-Signale von Personal Computern, und
- eine Signal-Schnittstelle für Signale von seriellen Datenverbindungen, insbesondere von RS 485-, RS 422- und RS 232 C-Datenverbindungen.

3. Multifunktionales Sichtanzeigegerät nach Anspruch 1,
**dadurch gekennzeichnet**,
daß die wenigstens zwei Signal-Schnittstellen (48) umfassen:
- eine Multisync-Signal-Schnittstelle für RGB-Signale, insbesondere der CCIR-Norm und dem Standard von Personal Computern entsprechende RGB-Signale und
- eine Signal-Schnittstelle für Signale von seriellen Datenverbindungen, insbesondere RS485-, RS422- und RS232C-Datenverbindungen.

4. Multifunktionales Sichtanzeigegerät nach einem der vorhergehenden Ansprüche, dadurch gekennzeichnet,
daß der Bildschirm (52) an einem mit dem Gehäuse (12) verbindbaren Trägerrahmen (60) befestigt ist.

5. Multifunktionales Sichtanzeigegerät nach Anspruch 4,
dadurch gekennzeichnet,
daß die Bildgeneratoren (50), der wenigstens eine Bildpunktspeicher (54), die Bildschirm-Schnittstelle (58) und die Ablaufsteuerungs-Einrichtung (56) am Trägerrahmen (60) angeordnet sind.

6. Multifunktionales Sichtanzeigegerät nach einem der vorhergehenden Ansprüche, dadurch gekennzeichnet,
daß die Signal-Schnittstellen (48) über Steckverbindungen (28,30), vorzugsweise Kabelsteckverbindungen oder Rack-und-Panel-Steckverbindungen, mit zur jeweiligen Signalquelle führenden Signalleitungen (32) verbindbar sind.

7. Multifunktionales Sichtanzeigegerät nach einem der vorhergehenden Ansprüche, dadurch gekennzeichnet,
daß das Gehäuse (12) wasserdicht und/oder EMV-dicht ausgebildet ist.

8. Multifunktionales Sichtanzeigegerät nach einem der vorhergehenden Ansprüche, dadurch gekennzeichnet,
daß der Bildschirm (52) als Flüssigkristall-Anzeige mit aktiver Halbleiter-Ansteuerung ausgebildet ist.

9. Multifunktionales Sichtanzeigegerät nach einem der Ansprüche 1 - 7, dadurch gekennzeichnet,
daß der Bildschirm (52) als CRT-Bildschirm ausgebildet ist.

10. Multifunktionales Sichtanzeigegerät nach einem der vorhergehenden Ansprüche, dadurch gekennzeichnet,
daß der Bildschirm (52) ein Farb-Bildschirm ist.

11. Multifunktionales Sichtanzeigegerät nach einem der vorhergehenden Ansprüche, dadurch gekennzeichnet,
daß wenigstens zwei Bildpunktspeicher (54) vorgesehen sind zur wechselweisen Speicherung der von den Bildgeneratoren (50) erzeugten Bilder und Darstellung der Bilder am Bildschirm (52).

12. Multifunktionales Sichtanzeigegerät nach einem der vorhergehenden Ansprüche, dadurch gekennzeichnet,
daß in dem Gehäuse (12) eine Mutterplatine (38) vorgesehen ist mit Möglichkeit eines Anschlusses von Steckkarten (76).

13. Multifunktionales Sichtanzeigegerät nach Anspruch 12,
dadurch gekennzeichnet,
daß an die Mutterplatine (38) wenigstens eine der folgenden Steckkarten (76) anschließbar ist :
- eine Datenübertragungs-Schnittstellenkarte zur Verbindung mit Datenkommunikationsgeräten, insbesondere Datenfunk,
- eine Massendaten-Schnittstellenkarte zum schnellen Laden von Daten von Massenspeichern,
- eine Datenbus-Schnittstellenkarte zum Anschluß an Datennetze,
- eine Analog-Schnittstellenkarte zur Anpassung an externe Geräte mit analoger Signalstruktur,
- eine Bildverarbeitungs-Steckkarte zur Bearbeitung der Bilder vor der Anzeige auf dem Bildschirm,

- eine Mikroprozessor-Steckkarte zur Ausführung von Datenverarbeitungsfunktionen,
- eine Massenspeicher-Steckkarte zur Bereitstellung hoher Speicherkapazität.

14. Multifunktionales Sichtanzeigegerät nach Anspruch 12,
dadurch gekennzeichnet,
    daß das Sichtanzeigegerät (10) durch Anschluß einer Mikroprozessor-Steckkarte an die Mutterplatine (38) als aktives Sichtanzeigegerät ausgebildet ist.

15. Multifunktionales Sichtanzeigegerät nach einem der vorhergehenden Ansprüche, dadurch gekennzeichnet,
    daß, für jede Signal-Schnittstelle (48) getrennt, Bedienungselemente (190), vorzugsweise Tastenfelder, vorgesehen sind, insbesondere zur Helligkeitseinstellung, Kontrasteinstellung und Einstellung der Position und Größe des Bildes am Bildschirm (52).

# Fig.1

# Fig. 2

## Fig.3

## Fig.4

# Fig. 5